# EUROPEAN PATENT APPLICATION

(11) **EP 4 459 694 A1**
(43) Date of publication of application: **06.11.2024**
(21) Application number: 22915527.0
(22) Date of filing: 31.10.2022
(51) Int. Cl.: H01M 4/131, H01M 4/505, H01M 4/525

(54) **POSITIVE ELECTRODE FOR SECONDARY BATTERY, AND METHOD FOR PRODUCING POSITIVE ELECTRODE ACTIVE MATERIAL FOR SECONDARY BATTERY**

(30) Priority: 28.12.2021 JP 2021214453
(71) Applicant: Panasonic Intellectual Property Management Co., Ltd., Kadoma-shi, Osaka 571-0057 (JP)
(72) Inventor: LEE, Youshin, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/040693
(87) International publication number: WO 2023/127294

(57) **Abstract**

This positive electrode for a secondary battery comprises a positive electrode current collector, and a positive electrode mixture layer disposed on the positive electrode current collector, wherein: the positive electrode mixture layer has a positive electrode active material containing a lithium-containing composite oxide composed of secondary particles in which primary particles are aggregated; the lithium-containing composite oxide has a Nb element; the average particle diameter of the primary particles is 1 µm or less; and in a depth profile obtained by time-of-flight secondary ion mass spectrometry (TOF-SIMS) of a cross-section of the positive electrode mixture layer, when the minimum ionic strength of Nb in the region from the surface of the positive electrode mixture layer to 500 nm in the thickness direction is Iₘᵢₙ and the maximum ionic strength of Nb in a region from 500 nm to 1000 nm in the thickness direction is Iₘₐₓ, Iₘₐₓ/Iₘᵢₙ is at least 1.5.

## Description

### TECHNICAL FIELD

The present invention relates to techniques for a positive electrode for a secondary battery and a method for producing a positive electrode active material for a secondary battery.

### BACKGROUND

As a positive electrode active material for a secondary battery such as a lithium ion secondary battery, for example, Patent Literature 1 discloses a positive electrode active material represented by a composition formula LiₓNi_{1-y}Co_{y-z}M_{z}O₂₋ₐX_{b} (M is at least Al), in which a lattice constant of an a-axis measured by X-ray diffraction is greater than or equal to 2.81 Å and less than or equal to 2.91 Å, a lattice constant of a c-axis measured by X-ray diffraction is greater than or equal to 13.7 Å and less than or equal to 14.4 Å, and a ratio of a diffraction peak intensity of a (104) plane to a peak intensity of a (003) plane is greater than or equal to 0.3 and less than or equal to 0.8.

### CITATION LIST

### PATENT LITERATURE

Patent Literature 1: JP 4197002 B

### SUMMARY

An object of the present disclosure is to provide a positive electrode for a secondary battery and a method for producing a positive electrode active material for a secondary battery that can increase the capacity of the secondary battery.

A positive electrode for a secondary battery according to one aspect of the present disclosure includes a positive electrode current collector and a positive electrode mixture layer disposed on the positive electrode current collector, in which the positive electrode mixture layer contains a positive electrode active material containing a lithium-containing composite oxide composed of secondary particles in which primary particles are aggregated, the lithium-containing composite oxide contains a Nb element, an average particle diameter of the primary particles is less than or equal to 1 µm, and in a depth profile obtained by time-of-flight secondary ion mass spectrometry (TOF-SIMS) of a cross section of the positive electrode mixture layer, Iₘₐₓ/Iₘᵢₙ is greater than or equal to 1.5, in which Iₘᵢₙ is a minimum ionic strength of Nb in a region from a surface of the positive electrode mixture layer to 500 nm in a thickness direction, and Iₘₐₓ is a maximum ionic strength of Nb in a region from 500 nm to 1,000 nm in the thickness direction.

A method for producing a positive electrode active material for a secondary battery according to one aspect of the present disclosure includes a first step of baking a mixture containing a lithium compound and a metal element-containing compound other than lithium to obtain a lithium-containing composite oxide; and a second step of mixing the lithium-containing composite oxide obtained in the first step with a solution in which a Nb compound is dissolved, and baking the obtained mixture.

According to one aspect of the present disclosure, it is possible to provide a positive electrode for a secondary battery and a method for producing a positive electrode active material for a secondary battery that can increase the capacity of the secondary battery.

### BRIEF DESCRIPTION OF DRAWINGS

FIG. 1 is a sectional view of a secondary battery of an example of an embodiment.
FIG. 2 is a view showing an ionic strength curve of Nb in a depth profile obtained by time-of-flight secondary ion mass spectrometry (TOF-SIMS) of a cross section of a positive electrode mixture layer.

### DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

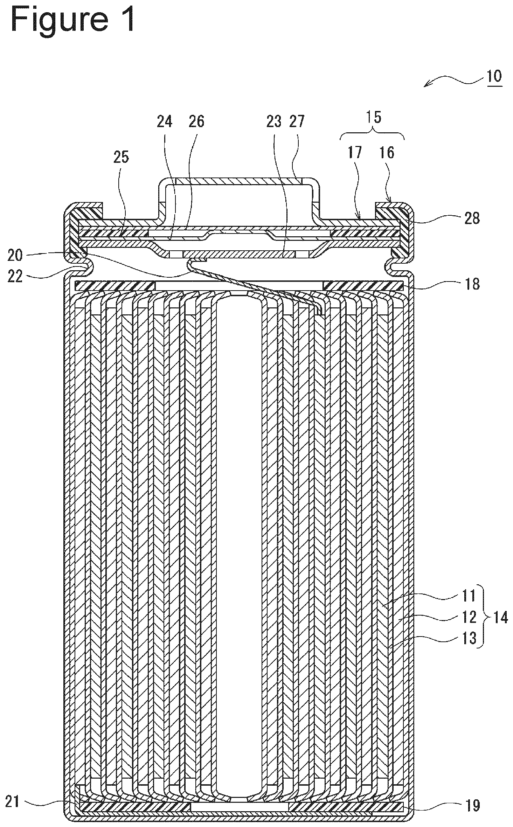

FIG. 1 is a schematic cross-sectional view of a secondary battery as an example of an embodiment. A secondary battery 10 illustrated in FIG. 1 includes a wound electrode assembly 14 formed by winding a positive electrode 11 and a negative electrode 12 with a separator 13 interposed between the positive electrode and the negative electrode, an electrolyte, insulating plates 18 and 19 that are disposed on upper and lower sides of the electrode assembly 14, respectively, and a battery case 15 housing the members. The battery case 15 includes a bottomed cylindrical case body 16 and a sealing assembly 17 for closing an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated type) formed by lamination with a resin sheet.

The electrolyte is, for example, a non-aqueous electrolyte containing a non-aqueous solvent and an electrolyte salt dissolved in the non-aqueous solvent. Examples of the non-aqueous solvent include esters, ethers, nitriles, amides, and mixtures of two or more thereof. The non-aqueous solvent may contain a halogen-substituted product in which at least a part of hydrogen in a solvent described above is substituted with a halogen atom such as fluorine. Examples of the electrolyte salt include lithium salts such as LiPF₆. Note that the electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure is further increased, the upper vent member 26 is broken, and gas is discharged through the opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 will be described in detail.

### [Positive Electrode]

The positive electrode 11 includes a positive electrode current collector and a positive electrode mixture layer provided on the positive electrode current collector. The positive electrode mixture layer contains a positive electrode active material. In addition, the positive electrode mixture layer may contain a conductive agent, a binder, or the like. The positive electrode 11 can be obtained, for example, by applying a positive electrode mixture slurry containing a positive electrode active material, a conductive agent, a binder, and the like onto a positive electrode current collector and drying the positive electrode mixture slurry to form a positive electrode mixture layer on the positive electrode current collector, and then rolling the positive electrode mixture layer. The positive electrode mixture layer may be provided on one surface of the positive electrode current collector, or may be provided on both surfaces of the positive electrode current collector.

As the positive electrode current collector, a foil of a metal stable in a potential range of the positive electrode, such as aluminum or an aluminum alloy, a film in which the metal is disposed on a surface layer, or the like can be used. The positive electrode current collector has a thickness of, for example, about greater than or equal to 10 µm and less than or equal to 100 µm.

The positive electrode active material includes a lithium-containing composite oxide composed of secondary particles in which primary particles are aggregated. The lithium-containing composite oxide is preferably a lithium-containing composite oxide represented by a composition formula: LiₓNi_{y}M_{(1-y)}O₂ (wherein x and y satisfy 1 < x < 1.4 and 0.5 < y ≤ 1.0, and M contains at least one of Mn, Co, Al, and Fe) from the viewpoint of increasing the capacity of the battery. M in the composition formula may contain other elements as long as it contains at least one of Mn, Co, Al, and Fe. Examples of the other elements include Zr, B, Mg, Sc, Y, Ti, Cu, Zn, Cr, Pb, Sn, Na, K, Ba, Sr, Ca, Mo, Si, V, Hf, Ta, and Nb.

The composition of the lithium-containing composite oxide can be confirmed by Rietveld analysis of parameters obtained by inductively coupled plasma emission spectrometry and powder X-ray diffraction.

The lithium-containing composite oxide contains a Nb element. An average particle diameter of the primary particles of the lithium-containing composite oxide is less than or equal to 1 µm, and the depth profile obtained by time-of-flight secondary ion mass spectrometry (TOF-SIMS) of the cross section of the positive electrode mixture layer has the following characteristics. Note that the time-of-flight secondary ion mass spectrometry (TOF-SIMS) is a method in which the cross section of the positive electrode mixture layer is irradiated with an ion beam (primary ion), and ions (secondary ions) from which some molecules constituting the surface are ionized and released are mass-separated using the time of flight difference (the time of flight is proportional to the square root of the weight). The depth profile by TOF-SIMS is an ionic strength curve obtained by performing TOF-SIMS on the cross section of the positive electrode mixture layer and measuring the ionic strength with respect to the depth of the positive electrode mixture layer (distance from the surface of the positive electrode mixture layer in the thickness direction). The depth profile (ionic strength curve) is a curve with the depth of the positive electrode mixture layer on the horizontal axis and the ionic strength on the vertical axis.

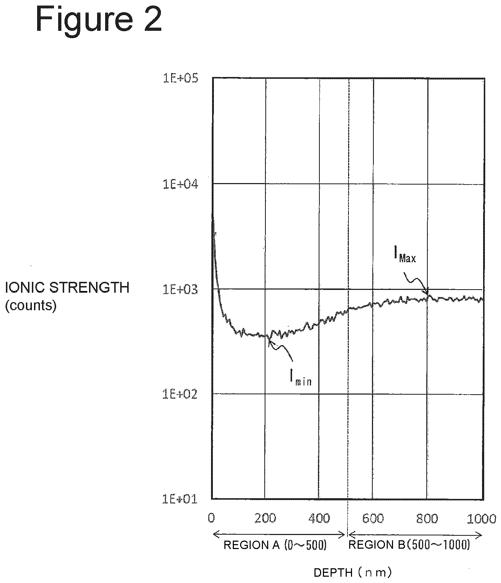

FIG. 2 is a view showing an ionic strength curve of Nb in a depth profile obtained by time-of-flight secondary ion mass spectrometry (TOF-SIMS) of a cross section of a positive electrode mixture layer. In the present embodiment, Iₘₐₓ/Iₘᵢₙ is greater than or equal to 1.5, in which Iₘᵢₙ is a minimum ionic strength of Nb in a region A of the positive electrode mixture layer illustrated in FIG. 2 with a depth of greater than or equal to 0 nm and less than or equal to 500 nm (a region from the surface of the positive electrode mixture layer to 500 nm in the thickness direction), and Iₘₐₓ is a maximum ionic strength of Nb in a region of the positive electrode mixture layer illustrated in FIG. 2 with a depth of greater than or equal to 500 nm and less than or equal to 1,000 nm (a region from 500 nm in the thickness direction to 1,000 nm in the thickness direction from the surface of the positive electrode mixture layer).

In the depth profile obtained by TOF-SIMS of the cross section of the positive electrode mixture layer, when Iₘₐₓ/Iₘᵢₙ is greater than or equal to 1.5, the battery capacity is improved. The state of the Nb element contained in the lithium-containing composite oxide is not sufficiently clear, but when Iₘₐₓ/Iₘᵢₙ is greater than or equal to 1.5, the amount of Nb solid-solved in the primary particles of the lithium-containing composite oxide is also large, and the Nb element not solid-solved is presumed to be in a state of being precipitated on the entire surfaces of the primary particles of the lithium-containing composite oxide. The presence of the Nb element in such a state is considered to lead to an improvement in the capacity of the secondary battery. On the other hand, when the amount of Nb solid-solved in the primary particles of the lithium-containing composite oxide is small or the Nb element is unevenly distributed on the surfaces of the primary particles of the lithium-containing composite oxide, Iₘₐₓ/Iₘᵢₙ is less than 1.5, but in this case, the capacity of the secondary battery cannot be sufficiently improved. In any case, from the viewpoint of improving the capacity of the secondary battery, Iₘₐₓ/Iₘᵢₙ may be greater than or equal to 1.5, and is more preferably greater than or equal to 1.8. An upper limit value of Iₘₐₓ/Iₘᵢₙ is not particularly limited, but Iₘᵢₙ is often determined by a solid solution upper limit concentration, and in this case, when Iₘₐₓ/Iₘᵢₙ is greater than or equal to 5 times and less than or equal to 10 times, the total weight increases and the performance per electrode weight decreases, and thus, it is preferable not to exceed 5.

A measurement method of the time-of-flight secondary ion mass spectrometry (TOF-SIMS) will be described. First, the positive electrode 11 is embedded in a resin, and the cross section of the positive electrode mixture layer is prepared by cross section polisher (CP) processing or the like. Then, time-of-flight secondary ion mass spectrometry (TOF-SIMS) is performed on the cross section of the positive electrode mixture layer. The time-of-flight secondary ion mass spectrometry (TOF-SIMS) is a method in which a sample surface is irradiated with an ion beam (primary ion), and ions (secondary ions) from which some molecules constituting the surface are ionized and released are mass-separated using the time of flight difference (the time of flight is proportional to the square root of the weight). Here, in order to obtain a profile in the thickness direction (depth direction) of the positive electrode mixture layer, the sample surface (cross section of the positive electrode mixture layer) is alternately irradiated with sputtering ions (O₂⁺) and primary ions (Bi₃⁺), and detected secondary ions (Nb ions: NbO³⁻) are analyzed.

The measurement conditions of TOF-SIMS are as follows.
Apparatus: TOF-SIMS (TOF-SIMS5) (manufactured by ION-TOF)
Sputtering ion species: ¹⁶O₂⁺
Sputtering ion acceleration energy: 1 kV
Sputtering area: 200 µm × 200 µm
Probe ion species: ²⁰⁹Bi₃⁺
Probe ion acceleration energy: 30 kV
Measurement area: 50 µm × 50 µm
Detection element: Negative
Charge neutralization correction: No
Number of scans: 200
Number of pixels: 256 × 256
Cycle time (measurement time per 1 pixel/1 scan) 75 µs
Post-acceleration: 9.5 kV
Measurement vacuum degree: 1 × 10⁻⁸ mbar

The average particle diameter of the primary particles in the lithium-containing composite oxide may be, for example, less than or equal to 1 µm from the viewpoint of further improving the capacity of the secondary battery, and is preferably greater than or equal to 0.2 µm and less than or equal to 0.7 µm.

The average particle diameter of the primary particles in the lithium-containing composite oxide is determined as follows. First, the positive electrode 11 is embedded in a resin, the cross section of the positive electrode mixture layer is prepared by cross section polisher (CP) processing or the like, and a cross section of the secondary particle is exposed. Then, a cross section of the secondary particle is imaged by a scanning electron microscope (SEM), and 30 primary particles are randomly selected from the cross-sectional SEM image. Grain boundaries of the selected 30 primary particles are observed, an outer shape of the primary particle is specified, and then, a long diameter (maximum diameter) of each of the 30 primary particles is measured. The average particle diameter of the primary particles is determined using the long diameter as the particle diameter of the primary particle.

An average particle diameter of the secondary particles in the lithium-containing composite oxide is, for example, preferably less than or equal to 20 µm in diameter, and is more preferably greater than or equal to 3 µm and less than or equal to 15 µm, from the viewpoint of further improving the capacity of the secondary battery. The average particle diameter of the secondary particles in the lithium-containing composite oxide is a volume average particle diameter measured by a laser diffraction method, and is a median diameter at which a volume integrated value is 50% in a particle diameter distribution. The average particle diameter of the secondary particles in the lithium-containing composite oxide can be measured by a laser diffraction method using, for example, MT3000II manufactured by MicrotracBEL Corp.

The amount of the Nb element present in the positive electrode active material is, for example, preferably less than or equal to 1% and more preferably greater than or equal to 0.1% and less than or equal to 0.5% in terms of a proportion to the total amount of Ni and M in the lithium-containing composite oxide from the viewpoint of further improving the capacity of the secondary battery. As described above, the Nb element includes an Nb element precipitated on the surfaces of the primary particles of the lithium-containing composite oxide and an Nb element solid-solved in the primary particles of the lithium-containing composite oxide. Therefore, the amount of the Nb element present in the positive electrode active material includes the amount of the Nb element present on the surfaces of the primary particles of the lithium-containing composite oxide and the amount of the Nb element solid-solved in the primary particles of lithium-containing composite oxide.

Hereinafter, an example of a method for producing a positive electrode active material of the present embodiment will be described.

The method for producing a positive electrode active material of the present embodiment includes a first step of baking a mixture containing a lithium compound and a metal element-containing compound other than lithium to obtain a lithium-containing composite oxide; and a second step of mixing the lithium-containing composite oxide obtained in the first step with a solution in which a Nb compound is dissolved, and baking the obtained mixture.

Examples of the lithium compound in the first step include lithium carbonate and lithium hydroxide. Examples of the metal element-containing compound other than lithium include a hydroxide and oxide containing a transition metal such as Ni or Mn. The metal element-containing compound other than lithium is preferably a composite hydroxide and composite oxide containing Ni and Mn. Note that the composite hydroxide containing Ni and Mn is obtained, for example, by a known coprecipitation method or the like.

The baking condition of the mixture in the first step is preferably, for example, a baking time of longer than or equal to 5 hours and shorter than or equal to 24 hours at a baking temperature in a range of higher than or equal to 600°C and lower than or equal to 1,100°C in the air.

The solution in which the Nb compound is dissolved in the second step is, for example, an alcohol solution in which niobium ethoxide is dissolved.

The baking condition of the mixture in the second step is preferably, for example, a baking time of longer than or equal to 1 hour and shorter than or equal to 10 hours at a baking temperature in a range of higher than or equal to 250°C and lower than or equal to 650°C in the air.

As described above, the Iₘₐₓ/Iₘᵢₙ described above can be easily controlled to greater than or equal to 1.5 by adding the solution in which the Nb compound is dissolved after producing the lithium-containing composite oxide, adjusting the baking temperature or the baking time in the second step, and the like. A portion covered with the Nb element can be controlled, for example, by adjusting the baking temperature or the baking time in the second step. In addition, a particle diameter of the lithium-containing composite oxide can be controlled by adjusting the baking temperature or the baking time in the first step.

Examples of the conductive agent contained in the positive electrode mixture layer include carbon-based particles such as carbon black (CB), acetylene black (AB), Ketjenblack, and graphite. These conductive agents may be used alone or in combination of two or more thereof.

Examples of the binder contained in the positive electrode mixture layer include a fluorine resin such as polytetrafluoroethylene (PTFE) or polyvinylidene fluoride (PVDF), polyacrylonitrile (PAN), polyimide, an acrylic resin, a polyolefin, a cellulose derivative such as carboxymethyl cellulose (CMC) or a salt thereof, and polyethylene oxide (PEO). These binders may be used alone or in combination of two or more thereof.

### [Negative Electrode]

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binder, and the like.

The negative electrode 12 is obtained by, for example, applying a negative electrode mixture slurry containing a negative electrode active material, a binder, and the like onto a negative electrode current collector and drying the slurry to form a negative electrode mixture layer on the negative electrode current collector, and rolling the negative electrode mixture layer. The negative electrode mixture layer may be provided on one surface of the negative electrode current collector, or may be provided on both surfaces of the negative electrode current collector.

The negative electrode active material may be a material capable of occluding and releasing lithium ions, and specific examples thereof include metal lithium, lithium alloys such as a lithium-aluminum alloy, a lithium-lead alloy, a lithium-silicon alloy, and a lithium-tin alloy, carbon materials such as graphite, coke, and an organic substance baked body, and metal oxides such as SnO₂, SnO, and TiO₂. These negative electrode active materials may be used alone or in combination of two or more thereof.

The binder may be, for example, a fluororesin, PAN, a polyimide, an acrylic resin, a polyolefin, or the like as in the case of the positive electrode 11, and may be styrenebutadiene rubber (SBR), CMC or a salt thereof, polyacrylic acid (PAA) or a salt thereof, polyvinyl alcohol (PVA), or the like.

### [Separator]

As the separator 13, for example, a porous sheet having an ion permeation property and an insulation property is used. Specific examples of the porous sheet include fine porous thin films, woven fabrics, and nonwoven fabrics. As a material for the separator, olefin-based resins such as polyethylene and polypropylene, cellulose, and the like are suitable. The separator 13 may be a laminate including a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

### EXAMPLES

Hereinafter, the present disclosure will be further described with reference to Examples. However, the present disclosure is not limited to the following Examples.

### <Examples>

### [Production of Positive Electrode Active Material]

Lithium hydroxide and a composite hydroxide containing Ni and Mn were mixed so that a molar ratio of Li to the total amount of Ni and Mn was 1.07: 1. The mixture was baked in the air at 900°C for 10 hours and then pulverized to obtain a lithium-containing composite oxide. Next, to the obtained lithium-containing composite oxide, 400 µL of an ethanol solution in which niobium ethoxide was dissolved so that a proportion was 0.25% with respect to the total amount of Ni and Mn in the oxide was added and mixed. The mixture was baked in the air at 300°C for 3 hours and then pulverized to obtain a lithium-containing composite oxide containing a Nb element. The lithium-containing composite oxide containing a Nb element was used as a positive electrode active material.

As a result of analysis by inductively coupled plasma (ICP) atomic emission spectroscopy, the amount of the Nb element present in the positive electrode active material was 0.25 mol% with respect to the total amount of Ni and Mn in the lithium-containing composite oxide.

### [Manufacture of Positive Electrode]

After mixing 95 parts by mass of the positive electrode active material, 5 parts by mass of acetylene black (AB) as a conductive agent, and 3 parts by mass of polyvinylidene fluoride as a binder, an appropriate amount of N-methyl-2-pyrrolidone (NMP) was added to prepare a positive electrode mixture slurry. Next, the positive electrode mixture slurry was applied onto both surfaces of a positive electrode current collector formed of an aluminum foil, and a coating film was dried and then rolled using a rolling roller. In this way, a positive electrode in which a positive electrode mixture layer was formed on both surfaces of the positive electrode current collector was manufactured.

From the obtained positive electrode, a cross section of the positive electrode mixture layer was prepared by the cross section polisher (CP) processing described above. Then, the cross section of the positive electrode mixture layer was subjected to time-of-flight secondary ion mass spectrometry (TOF-SIMS) under the conditions described above to obtain a profile (depth profile) in a thickness direction (depth direction) of the positive electrode mixture layer. From the depth profile, calculation was performed using Iₘᵢₙ as a minimum ionic strength of Nb in a region from a surface of the positive electrode mixture layer to 500 nm in a thickness direction, and Iₘₐₓ as a maximum ionic strength of Nb in a region from 500 nm to 1,000 nm in the thickness direction, Iₘₐₓ/Iₘᵢₙ was 1.9.

In addition, the cross section of the positive electrode mixture layer was observed by SEM, and the particle diameters of the primary particles of the positive electrode active material were measured under the conditions described above. As a result, the average particle diameter of the primary particles of the positive electrode active material was 0.5 µm.

### [Preparation of Non-Aqueous Electrolyte]

Ethylene carbonate (EC), dimethyl carbonate (DMC), and ethyl methyl carbonate (EMC) were mixed at a volume ratio of 20:75:5. LiPF₆ was dissolved in the mixed solvent so as to have a concentration of 1.3 mol/L to prepare a non-aqueous electrolyte.

### [Manufacture of Secondary Battery]

Electrode leads were attached to the metal lithium as the positive electrode and the negative electrode, respectively. Then, an electrode assembly with a separator interposed between the positive electrode and the negative electrode was produced, the electrode assembly was housed in an aluminum laminate film, and the non-aqueous electrolyte was injected and sealed. This battery was used as a secondary battery of Example.

### <Comparative Example 1>

### [Production of Positive Electrode Active Material]

Lithium hydroxide and a composite hydroxide containing Ni and Mn were mixed so that a molar ratio of Li to the total amount of Ni and Mn was 1.07: 1. The mixture was baked in the air at 900°C for 10 hours and then pulverized to obtain a lithium-containing composite oxide. Next, the obtained lithium-containing composite oxide and a niobium oxide (N_{b}2O₅) powder were mixed, and the mixture was baked in air at 600°C for 3 hours and then pulverized to obtain a lithium-containing composite oxide containing a Nb element. The lithium-containing composite oxide containing a Nb element was used as a positive electrode active material.

In addition, as a result of analysis by inductively coupled plasma (ICP) atomic emission, the amount of the Nb element present in the positive electrode active material was 0.25 mol% with respect to the total amount of Ni and Mn.

A positive electrode was manufactured using the positive electrode active material in the same manner as in Example. From the obtained positive electrode, a cross section of the positive electrode mixture layer was prepared by the cross section polisher (CP) processing described above. Then, the cross section of the positive electrode mixture layer was subjected to time-of-flight secondary ion mass spectrometry (TOF-SIMS) under the conditions described above to obtain a profile (depth profile) in a thickness direction (depth direction) of the positive electrode mixture layer. From the depth profile, Iₘₐₓ/Iₘᵢₙ (maximum ionic strength of Nb/minimum ionic strength of Nb) was calculated and found to be 1.2.

In addition, the cross section of the positive electrode mixture layer was observed by SEM, and the particle diameters of the primary particles of the positive electrode active material were measured under the conditions described above. As a result, the average particle diameter of the primary particles of the positive electrode active material was 0.5 µm.

Then, a secondary battery was manufactured using the positive electrode of Comparative Example 1 in the same manner as in Example.

### <Comparative Example 2>

### [Production of Positive Electrode Active Material]

Lithium hydroxide and a composite hydroxide containing Ni and Mn were mixed so that a molar ratio of Li to the total amount of Ni and Mn was 1.07: 1. The mixture was baked in the air at 900°C for 10 hours and then pulverized to obtain a lithium-containing composite oxide. A secondary battery was manufactured in the same manner as in Example, except that the lithium-containing composite oxide was used as a positive electrode active material of Comparative Example 2.

### [Measurement of Initial Capacity of Battery]

Each of the secondary batteries of Example and Comparative Examples was subjected to constant current charge at 0.1 C until a cell voltage reached 4.7 V, and then was subjected to constant voltage charge at 4.7 V until a current value reached 0.05 C, under a temperature environment at 25°C. Next, constant current discharge was performed at 0.1 C until a cell voltage reached 2.5 V The discharge capacity at this time was defined as the capacity of the secondary battery.

The capacity of the secondary battery of Example was 226.45 mAh/g, the capacity of the secondary battery of Comparative Example 1 was 222.82 mAh/g, and the capacity of the secondary battery of Comparative Example 2 was 218.1 mAh/g. From these results, it can be said that the capacity of the secondary battery can be improved by using a positive electrode in which a positive electrode mixture layer contains a positive electrode active material containing a lithium-containing composite containing a Nb element and having an average particle diameter of primary particles of less than or equal to 1 µm, and in a depth profile obtained by time-of-flight secondary ion mass spectrometry (TOF-SIMS) of a cross section of the positive electrode mixture layer, Iₘₐₓ/Iₘᵢₙ is greater than or equal to 1.5, in which Iₘᵢₙ is a minimum ionic strength of Nb in a region from a surface of the positive electrode mixture layer to 500 nm in a thickness direction, and Iₘₐₓ is a maximum ionic strength of Nb in a region from 500 nm to 1,000 nm in the thickness direction.

### REFERENCE SIGNS LIST

- 10: Secondary Battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode for a secondary battery, comprising a positive electrode current collector; and a positive electrode mixture layer disposed on the positive electrode current collector,
wherein the positive electrode mixture layer contains a positive electrode active material containing a lithium-containing composite oxide composed of secondary particles in which primary particles are aggregated,
the lithium-containing composite oxide contains a Nb element,
an average particle diameter of the primary particles is less than or equal to 1 µm, and
in a depth profile obtained by time-of-flight secondary ion mass spectrometry (TOF-SIMS) of a cross section of the positive electrode mixture layer, Iₘₐₓ/Iₘᵢₙ is greater than or equal to 1.5, in which Iₘᵢₙ is a minimum ionic strength of Nb in a region from a surface of the positive electrode mixture layer to 500 nm in a thickness direction, and Iₘₐₓ is a maximum ionic strength of Nb in a region from 500 nm to 1,000 nm in the thickness direction.

2. The positive electrode for a secondary battery according to claim 1, wherein the lithium-containing composite oxide is represented by a composition formula: LiₓNi_{y}M_{(1-y)}O₂ (wherein x and y satisfy 1 < x < 1.4 and 0.5 < y ≤ 1.0, and M contains at least one of Mn, Co, Al, and Fe).

3. The positive electrode for a secondary battery according to claim 1 or 2, wherein an average particle diameter of the secondary particles is 3 µm.

4. The positive electrode for a secondary battery according to any one of claims 1 to 3, wherein the amount of the Nb element present in the positive electrode active material is greater than or equal to 0.1% and less than or equal to 1% of the total amount of Ni and M in the lithium-containing composite oxide.

5. A method for producing a positive electrode active material for a secondary battery, the method comprising: a first step of baking a mixture containing a lithium compound and a metal element-containing compound other than lithium to obtain a lithium-containing composite oxide; and a second step of mixing the lithium-containing composite oxide obtained in the first step with a solution in which a Nb compound is dissolved, and baking the obtained mixture.
